# EUROPEAN PATENT SPECIFICATION

(11) **EP 3 324 219 B1**
(45) Date of publication and mention of the grant of the patent: **19.12.2018**
(21) Application number: 16460089.2
(22) Date of filing: 22.11.2016
(51) Int. Cl.: G01W 1/10

(54) **METHOD FOR DETERMINING AN EXPECTED INFLOW TO A WATER RESERVOIR**
VERFAHREN ZUR BESTIMMUNG DES ERWARTETEN ZUSTROMS ZU DEM WASSERRESERVOIR
PROCÉDÉ DE DÉTERMINATION DE CAPTAGE ATTENDU DANS UN RÉSERVOIR D'EAU

(43) Date of publication of application: 23.05.2018
(73) Proprietor: Uniwersytet Wroclawski, 50-137 Wroclaw (PL)
(72) Inventor: Mizinski, Bartlomiej, 50-137 Wroclaw (PL); Niedzielski, Tomasz, 50-137 Wroclaw (PL); Kryza, Maciej, 50-137 Wroclaw (PL); Swierczynska-Chlasciak, Malgorzata, 50-137 Wroclaw (PL)
(74) Representative: Haznar, Anna Maria

(56) References cited:
- JP-A- H01 191 210
- US-A1- 2013 212 048
- NIEDZIELSKI T.; WITEK M.; SPALLEK W.: "Observing river stages using unmanned aerial vehicles", HYDROLOGY AND EARTH SYSTEM SCIENCES, vol. 20, 9 August 2016 (2016-08-09), pages 3193-3205, XP002768990,

## Description

The object of the invention is a method for determining the expected inflow to the water reservoir, especially with sufficient accuracy to allow transmission of the expected inflow to the control rule for the water reservoir in any chosen catchment. The method may be part of the procedure of early warning about hydrological hazards, such as high flows and floods, allowing appropriate control of water reservoirs (e.g. retention reservoirs). The method is particularly preferably carried out for rivers catchments for which regular measurements of water level and discharge are made at hydrological gauges, the said measurements being available in real time.

Hydrological systems, especially those aimed at preventing floods, usually include terrain infrastructure aimed, among others, at minimising the effects of high flows. Such an infrastructure may include passive components, such as earth embankments (PL396077A1) or functional barriers (EP0839231B1). On watercourses (canals, rivers), retention reservoirs are also created which are often equipped with active tools for controlling the inflow and outflow of water in the reservoir, also including electricity generation systems. As an example, patent 1456533B1 can be provided which discloses, among others, a method for controlling water levels in a dam installation having multiple turbine generators, or document WO2011071397 can be provided which discloses an invention the essence of which is modification of water levels in the river channel, activated during a high flows or before the advent thereof. However, modern and active counteracting of negative effects of high flows and floods on which modern systems mainly focus, requires also the use of solutions based on processing of hydrometeorological signals for early warning against high flows and allowing preparation of hydrotechnical ground infrastructure for the changing conditions. As examples of such solutions, an invention known from US7984052 patent specification can be provided which is a system for conversion of data of various formats for their integration with the geographic information system. One variant of the invention is that the weather interactive processing system can be e.g. AWIPS (Advanced Weather Interactive Processing System).

US6947842 patent specification provides a technique for generating flood warnings in the form of standardised and animated maps of areas which can be flooded, and these maps are created based on external forecasts of water levels.

Also, US8614631 patent specification provides a system for automatic notification of flood hazard, the system being based on notification by telephone and sending SMS (Short Message Service) messages based on collected hydrometeorological data and calculated forecasts.

An alternative approach, known from US6581009 invention, is forecasting rainfall for the needs of hydrological models predicting flash floods.

Approach disclosed in the JPH01191210A application, related to the dam gate control method, also aggregates rainfall forecasts but additionally with the upstream dam discharges. In order to keep the dam water level constant or prepared for unexpected water inflow, differential control method is employed, using the predicted (expected) inflow amount value and real wall entrance.

Another combination of forecasting parameters and hydrological parameters is disclosed in the patent application US20130212048 A1. A method of performing real-time correction of a water stage forecast of the application, comprises among others obtaining at least two predicted water stages of different points in time and at least one observed (measured) water stage at least one time. Predicted water stage is corrected according to the calculated errors, i.e. system error and random error generated using Kalman filter method.

However, data on expected high flows or expected hydrographs and the resulting inflows to the water reservoirs can be characterised by errors which consequently can translate into lower operational effectiveness of rules controlling hydrotechnical devices. The forecasting is, in fact, based most often on point measurement of water level or discharge in watercourse channel, wherein the said measurement can be disturbed by external factors, e.g. through water damming up locally caused by non-standard human activities or through damage to the sensor at the measurement point. The use of redundant sensors increases the reliability of measurements of water level but does not eliminate the problem associated with pointwise measurement of water level on water level gauges on watercourses. As a result, despite the use of modern tools for computer simulation, forecasting of discharges and determination of parameters for controlling hydrotechnical devices, such as e.g. water reservoirs, are still subject to considerable errors.

The proposed solution concerning the method for determining the expected inflow to the water reservoir allows determination of the expected inflow to the water reservoir with high accuracy through additional spatial verification of reliability of measurements made at measurement points on watercourses. Because pointwise and spatial measurements on the watercourses are combined in the method according to the invention, the obtained forecasts of the inflow are characterised by high reliability. The thus determined inflows may therefore be one of the input parameters for the rules controlling hydrotechnical devices, especially water reservoirs.

The method for determining expected inflow to a water reservoir, for a rule controlling the water reservoir in any chosen catchment, is characterised in that it comprises the following steps.

In step 1, discharges at at least two different measurement points on at least one watercourse belonging to the same catchment are determined periodically in time, at least until an expected inflow is determined (t₀).

In step 2, a periodic-in-time measurement, at least until the expected inflow is determined (t₀) and at least at a time preceding the expected inflow determination (t₋₁), is made for a surface area of the watercourse between a measurement point located on the watercourse above an outfall to the reservoir and the outfall to the reservoir.

In step 3, series of measurement data obtained from the preceding steps are collected for the processing system.

In step 4, verification and/or cross compliance of times of series of collected measurement data are carried out.

In step 5, identification and possible correction of initially considered as erroneous measurement data comprises:
- identification of measurement data deviating from the normal distribution of the measurement data collected in the preceding step for all measurement points using the Rosner's test;
- identification of erroneous data for the measurement series from a point above the outfall to the water reservoir, wherein the data is considered erroneous if at a given time, the measurement data near the point at the outfall to the reservoir deviates from the normal distribution, and the measurement data from another measurement point, upstream relative to the first measurement point, is not a data deviating from the normal distribution;
- correction of erroneous data from the measurement point near the outfall to the water reservoir, by using linear interpolation on data adjacent to the erroneous data, wherein if the erroneous data is at the end of the measurement series, this data remains unchanged.

In step 6, verification of reliability of measurements at the end of the series is carried out by taking into account the measurement of water surface area of the watercourse from step 2 at the time at which the expected inflow is determined (t₀) and at the time preceding the expected inflow determination (t₋₁), wherein:
- if at the end of the series there is a correct data and the measurement of the water surface area made in step 2 does not indicate any change in the water surface area between the time at which the expected inflow is determined (t₀) and the time preceding the expected inflow determination (t₋₁), the discharge value at the end of the series is unchanged,
- if at the end of the series there is a correct data and the measurement of the water surface area made in step 2 indicates a change in the water surface area between the time at which the expected inflow is determined (t₀) and the time preceding the expected inflow determination (t₋₁), the end point of the series is determined based on linear regression using at least two available measurement points,
- if at the end of the series there is an erroneous data and the measurement of the water surface area made in step 2 does not indicate any change in the water surface area between the time at which the expected inflow is determined (t₀) and the time preceding the expected inflow determination (t₋₁), the last correct value is assigned to the discharge at the end of the series,
- if at the end of the series there is an erroneous data and the measurement of surface area indicates a change in the water surface area between the time at which the expected inflow is determined (t₀) and the time preceding the expected inflow determination (t₋₁), the discharge value at the end of the series is unchanged and is considered to be correct.

System solutions for determining inflows to water reservoirs, known in the art, did not make the spatial correction of hydrological measurements, especially at the end of the measurement series. This resulted from the assumption that no alarm in case of high flow emergency is more disadvantageous than a few false alarms due to, for example, sensor failure. According to the invention, thanks to the introduction of the measurements of surface area of the watercourse, as in step 2, it is possible to make, in step 6, a reliable correction of the measurement data measured in step 1, at the end of the measurement series (i.e. measured at time t₀) and considered to be correct or erroneous in step 5 (wherein in the specification, designation of measurement data as correct or erroneous in step 5 is also determined as a preliminary designation of the measurement data as correct or erroneous). These are in fact the measurement data that are crucial from the viewpoint of determining the expected inflow to the water reservoir.

In step 7, the data corrected in the previous steps are transmitted for the calculation, in the processing system, of expected inflow to the water reservoir, and expected water inflow to the reservoir is calculated, in the processing system, based on data from previous steps.

Preferably, the expected water inflow to the reservoir based on data from previous steps is an inflow calculated for the next 12 hours (designated in the specification as t₁₂), but also for 24 hours (t₂₄).

In step 8, the expected water inflow is transmitted as a parameter to the rule controlling the water reservoir.

Preferably, the transmission of the expected inflow as a parameter to the rule controlling the water reservoir is carried out by known means, preferably by means of data communications network. The rules controlling the reservoir can include a plurality of various parameters, whereas the expected inflow is an important parameter for managing the potential amount of water in the reservoir, especially in a situation of flood hazard.

Preferably, the discharge in step 1 is determined based on the measurement of water level, converted into discharge value using a rating curve and/or based on the measurement of water level, a measurement of water discharges velocity at the surface of the watercourse and of bed cross-section, converted into discharge values, using the continuity equation.

Determination of discharge is known in the art and can be carried out by several methods (e.g. Turnipseed and Sauer, 2010). It is common in hydrological practices to use a rating curve (also called the rating table) which allows discharge calculation based on measurement of water level (e.g. Braca, 2008). Among the solutions used for automatic determination of discharge for the needs of hydrological monitoring systems operating in real time, there is a method for determining the discharge using the continuity equation, according to which the discharge is the product of the area occupied by water in the channel cross-section and of the average velocity of the water discharge (e.g. Ghosh and Desai, 2006). In this approach, the water discharge velocity and the water level are measured, and the latter, with the knowledge of the cross profile of the bottom of the watercourse bed, is converted to the area appearing in the continuity equation.

Preferably, the measurement points in the method according to the invention are water gauges. Preferably, the measurement points are points located within the same catchment, wherein one of them is located at the outlet, located upstream relative to the outfall of the watercourse to the water reservoir, and the other ones are located above this outlet.

On the other hand, the measurement point located at the outfall to the reservoir is preferably a measurement point (preferably a water gauge) positioned closest to the outfall to the reservoir and at the same time upstream relative to the outfall to the reservoir.

Preferably, measurement of the surface area of the watercourse is determined by means of at least 8 rectangular orthophotomap fragments showing the course of the watercourse, the said orthophotomaps being generated by the SfM, Structure-from-Motion, method based on at least one oblique image taken by an unmanned aerial vehicle.

Determination of the watercourse surface area measurement is known in the art and can be carried out by tools of geographic information systems (georeferenced orthophotomap is a cartographic background for vectorisation of places covered with water, and as a result of vectorisation, polygons are generated, the areas of which are calculated based on geometric methods normally implemented in geographic information systems), as described in the article by Niedzielski et al. (2016).

Also, the SfM method for generating orthophotomaps is known in the art and was described, e.g., in the work by Westoby et al. (2012).

The SfM method and the standard post-processing following it consist of several steps: identification of keypoints on each oblique aerial image together with provision of descriptors of these points, matching oblique aerial photos using the keypoints, determining the parameters of position and orientation of the camera and reconstruction of three-dimensional terrain topography in the form of a sparse point cloud, densification of this cloud by means of stereo-vision and generating a dense point cloud, georeferencing the dense point cloud, spatial interpolation and creating a digital surface model and an orthophotomap.

Usually, the orthophotomap is determined based on a collection of oblique images, wherein the collection size, i.e. number of oblique images necessary to determine the orthophotomap, may vary and is dependent on the condition of visibility of the same keypoint on at least three oblique aerial images.

Preferably, measurement of surface area of the watercourse is determined based on oblique images with longitudinal overlap of 80% and lateral overlap of 60%.

Furthermore, the term "unmanned aerial vehicle" should be understood as any device comprising means for taking oblique images from a pre-determined height above the watercourse. This may be, e.g., the unmanned aerial vehicle as described in the work by Niedzielski et al. (2016).

Genesis of data considered to be erroneous in step 5 (i.e. in the method according to the invention initially considered to be erroneous and subject to verification in further steps of the method) at the end of the measurement series (i.e. for the last measurement) may be related to technical causes (e.g. sensor failure), environmental causes (e.g. a local heavy rain causing spatially limited flash flood) or anthropogenic causes (e.g. creation of artificial local rises of water by children). It is therefore a preferable feature of the invention that the reliability is assessed on the basis of observations, which are of spatial nature, carried out by the unmanned aerial vehicle. Such a solution exceeds the redundancy of water level sensors as they have only pointwise positions.

Preferably, in the method according to the invention, the discharge determination from step 1 and the measurement of surface area of the watercourse from step 2 are carried out with the same time interval.

Periodic-in-time determination, periodic-in-time measurement, from step 1 and/or step 2, represent measurements at repeated time intervals.

Preferably, the time interval lasts 1 hour. The time interval may also be 30 min, 15 min, 10 min.

Preferably, the calculation, in the processing system, of the expected water inflow to the reservoir in step 8 is carried out using one- or multi-dimensional autoregression.

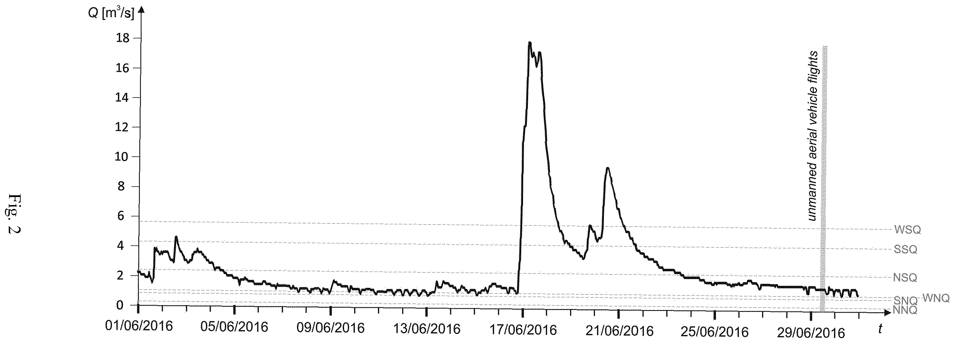

Preferably, the calculation in the processing system is carried out with the use of B3, B4, C1, C2 and E modules from the HydroProg system (Niedzielski et al., 2014; fig. 2). In particular, in C1, C2 and E modules, a combination of two solutions of one- or multi-dimensional autoregression is used (Niedzielski and Miziński, 2016).

Preferably, the method is carried out in real time and/or is carried out at any time.

This means that data from the measurement points (e.g. water gauges) or from the unmanned aerial vehicle are sent on an ongoing basis (in real time) to the processing system and/or are collected, e.g., in the internal memory, in database of the measurement device, and are sent to the processing system at a pre-determined time or when it is possible to send them.

Preferably, a section of the watercourse between the outfall to the reservoir and a measurement point near the outfall to the reservoir is a section without tributaries.

If the section of the watercourse between the outfall to the reservoir and the measurement point near the outfall to the reservoir is a section without tributaries (there does not exist any tributary in this section), it can be assumed that these discharges, when integrated over time, approximate with a high accuracy the inflow to the reservoir.

Preferably, the measurement points are located within one catchment, above an outlet located upstream of the river in relation to its outfall to the water reservoir.

Preferably, one of the measurement points is located at the outlet upstream of the watercourse relative to its outfall to the water reservoir, and the other ones are located above this outlet.

It is also preferable when a measurement point near the outfall to the reservoir is distanced from the outfall to the reservoir by at least 1.9 km.

According to the invention, the measurement point near the outfall to the reservoir can be distanced from the outfall to the reservoir substantially by any distance. However, it is preferable when it is distanced by at least 500 m, at least 1 km, at least 2 km, at least 10 km. A short distance between the measurement point and the outfall to the reservoir means that the expected inflow should be calculated shortly in advance. Whereas a long distance between the measurement point and the outfall to the reservoir means that much longer time of the expected inflow should be considered and oblique images of a larger area should be provided.

Preferably, the method is performed by a computer program implemented in the computer processing system.

Especially steps 3 to 8 are performed by a computer program implemented in the computer processing system.

Any computer processing system performing the method according to the invention, especially steps 3 to 8, is possible.

The change of water surface area from step 6 may be for example an increase of water surface area.

If the increase of surface area is a statistically significant increase of water surface area which is correlated with the increase of water level and discharge it can be determined using the two-sample Student t-test in the Bootstrap version, wherein coefficient p for a statistically significant increment is lower than 0.01.

The Student t-test in the Bootstrap version is known in the art. It consists in the use of the Bootstrap method (Efron, 1979) which is based on creating, on the basis of one sample containing measurement data, a large number of new samples, which is carried out through sampling with replacement from the original sample. For each of the new samples, a value of the t-Student statistics is calculated, and a large number of these values allows calculation of the average (Niedzielski et al., 2016).

### DETAILED DESCRIPTION OF THE INVENTION

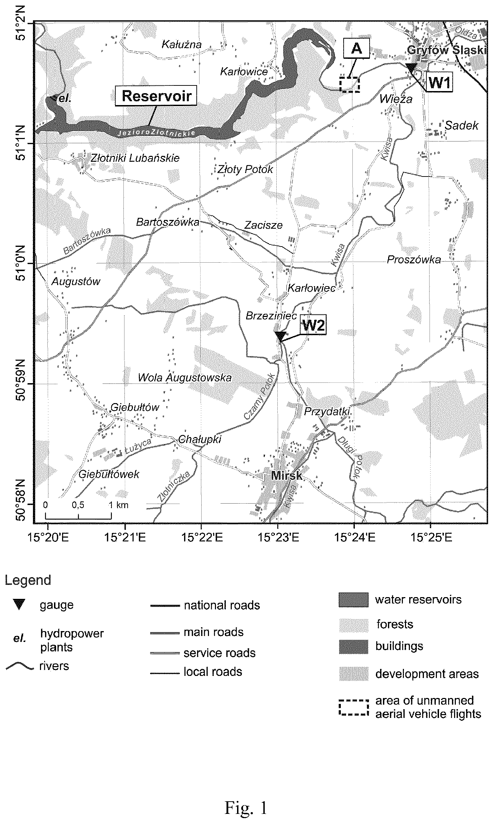

The object of the invention is shown in the drawing in which
fig. 1 shows a map of Z 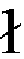 otnickie lake with hydrotechnical facilities and an indication of places for the observation of water level (water gauges) and of water surface area (unmanned aerial vehicle);
fig. 2 shows a hydrograph of the discharge of the Kwisa river in Gryfów Śl 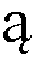 ski in the period of 01/06/2016-30/06/2016 together with an indicated period of carrying out the flight of the unmanned aerial vehicle and characteristic discharges (NNQ - the minimum discharge in the multiannual period, SNQ - the average of the minimum annual discharges in the multiannual period, WNQ - the maximum discharge from the minimum annual discharge in the multiannual period, NSQ - the minimum discharge from the average annual discharges in the multiannual period, SSQ - the average of the average annual discharges in the multiannual period, WSQ - the annual discharge from the average annual discharges in the multiannual period);

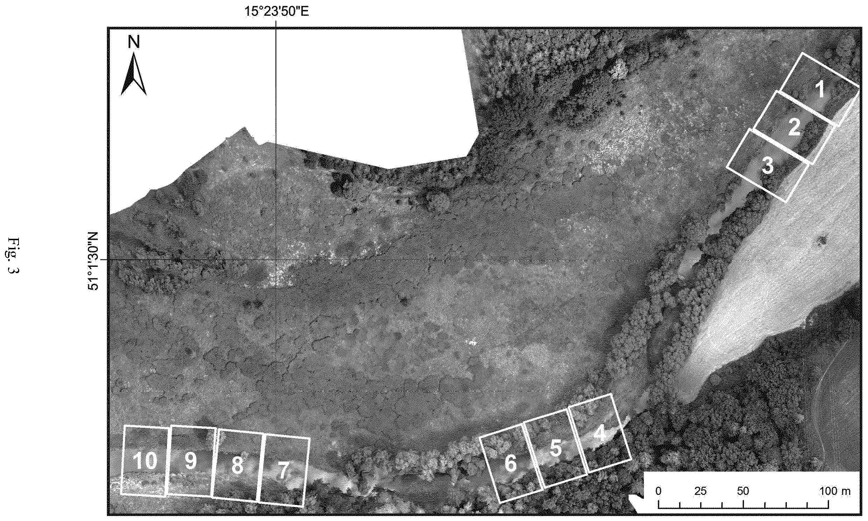

fig. 3 shows sub-areas selected within the flight area of the unmanned aerial vehicle, where measurements of water surface area are made;

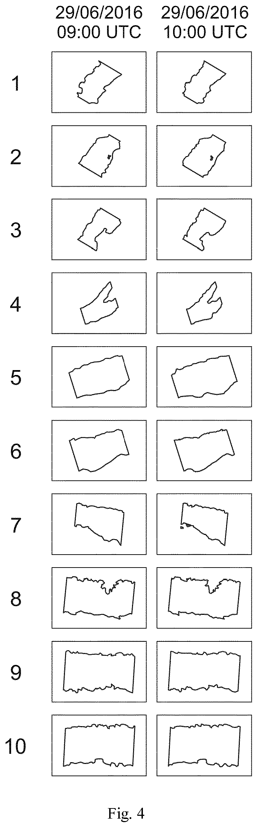

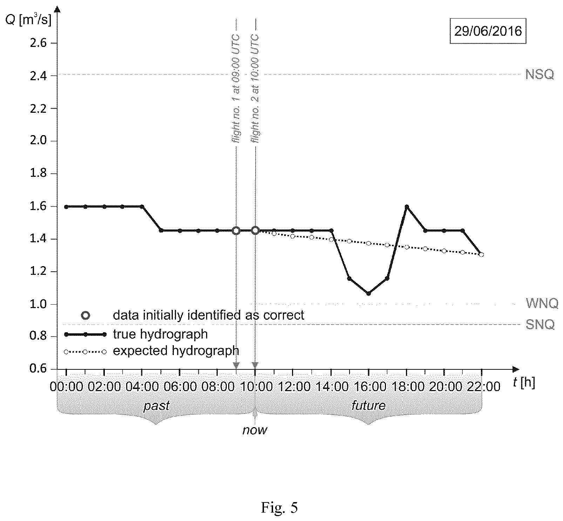

fig. 4 shows water surfaces measured on orthophotomaps generated on the basis of observations with a camera mounted on the unmanned aerial vehicle in two time instants corresponding to the measurements of water level carried out at the water gauge at t_₁= 09:00 UTC and t₀=10:00 UTC dated 29/06/2016, wherein the measurements of water surface area are limited to the sub-areas indicated in fig. 3; Fig. 5 shows the actual course of discharge variability for the Kwisa river in Gryfów Śl 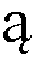 ski (W1) and the corresponding 12-hour expected course of discharge variability determined with t₀= 10:00 UTC dated 29/06/2016. Also, selected characteristic discharges are indicated (SNQ - the average of the minimum annual discharges in the multiannual period, WNQ - the maximum discharge from the minimum annual discharges in the multiannual period, NSQ - the minimum discharge from the average annual discharges in the multiannual period);

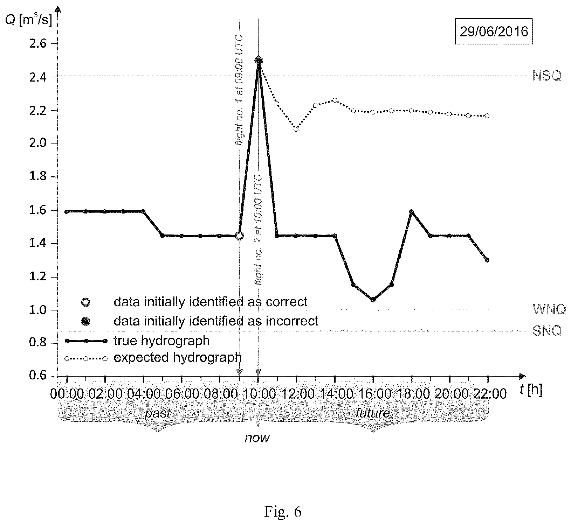

fig. 6 shows the actual course of discharge variability for the Kwisa river in Gryfów Slqski (W1) with an artificially introduced perturbation for the time of t₀=10:00 UTC dated 29/06/2016 and the corresponding 12-hour expected course of discharge variability determined from t₀. Also, selected characteristic discharges are indicated (SNQ - the average of the minimum annuals discharges in the multiannual period, WNQ - the largest discharge from the minimum annual discharges in the multiannual period, NSQ - the minimum discharge from the average annual discharges in the multiannual period).

Other features and advantages of the invention will appear upon reading the non-limiting embodiments provided below.

### EMBODIMENTS OF THE INVENTION

In the embodiments described below, the method according to the invention will be presented in two variants for the actual water reservoir.

In the embodiments below, calculation of the expected inflow to the water reservoir which is Z 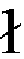 otnickie lake, located in the southwestern Poland, by the method according to the invention, together with the error of this calculation, is presented. Reliability of the measurements was confirmed by an additional hydrometric measurement carried out with the use of observations conducted by the unmanned aerial vehicle.

### General description of physical-geographical parameters

Z 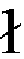 otnickie lake is a dam reservoir located on the Kwisa river (watercourse according to the invention) and is of flow-through lake type. In fig. 1, a map of the area, in which the method according to the invention was carried out, is presented.

The flow gauging station, belonging to the National Hydrological and Meteorological Services (PSHM) led by the Institute of Meteorology and Water Management - National Research Institute (IMGW-PIB), is a water gauge with the code 151150110 located on the Kwisa river (watercourse according to the invention) in Gryfów Śl 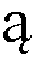 ski and it is the first measurement point near the outfall to the reservoir (upstream of the watercourse from the inflow to the water reservoir) indicated in fig. 1 as W1. Water levels (H expressed in cm) are measured there every hour, and the discharges (Q expressed in m³/s) are provided with the same frequency on the basis of conversion of the water level value to the discharge value with the use of the rating curve, i.e. the rating table. The considered outlet is located about 1.9 km from the outfall of the Kwisa river to Z 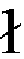 otnickie lake, which, with no tributaries on this section, allows assuming that these discharges, when integrated over time, approximate the inflow to the reservoir.

The second measurement point is a water gauge located on the Kwisa river in Mirsk, indicated in fig. 1 as W2.

In the embodiments, calculation of the expected inflow to the reservoir together with the error in the period from the time of last measurement (t₀) on the water gauge on the Kwisa river in Gryfów Śl 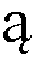 ski (W1) to 12 h forward (t₁₂) will be presented.

Reliability of measurements on the W1 water gauge is verified on the basis of independent measurements of water surface area on the river (area of observations (measurements) made with the unmanned aerial vehicle is indicated by a dashed line in fig. 1 and is indicated with A, where A is expressed in m²) carried out on the basis of the orthophotomap prepared from aerial images taken with a camera mounted on the unmanned aerial vehicle. In the embodiment, the time of last measurement (t₀) was assumed to be 10:00 UTC dated 29/06/2016, which means that the expected inflow to the water reservoir is estimated for the period of 10:00-22.00 UTC on the same day. The embodiment is implemented in two variants described below.

### Implementation of the method according to the invention

In step 1, according to the invention, discharges in at least two measurement points are determined periodically in time. According to the embodiment:
- discharges Q in the first measurement point W1 on the Kwisa river in Gryfów Śl 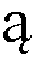 ski were determined with the use of the rating curve on the basis of regular measurements of water levels H by the water level sensor until and including instant t₀ (fig. 2), wherein measurement of water level H of the Kwisa river on the water gauge in Gryfów Śl 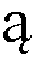 ski (W1) was repeated with the water level sensor until and including instant t₀;
- discharges Q in the second measurement point W2 on the Kwisa river in Mirsk were determined with the use of the rating curve on the basis of regular measurements of water levels H by the water level sensor until and including instant t₀ (not shown), wherein measurement of water level H of the Kwisa river on the water gauge in Mirsk (W2) was repeated with the water level sensor until and including instant t₀.

In step 2, measurement of watercourse surface area is made. As part of the embodiment, measurements of surface area A of ten sections of the watercourse (the Kwisa river) located between the water gauge in Gryfów Śl 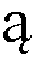 ski (W1) and the outfall of the Kwisa river to Z 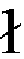 otnickie lake, i.e. between the measurement point near the outfall to the reservoir and the outfall to the water reservoir (indicated 1 to 10 in fig. 3), were made, wherein these measurements were made on the orthophotomap prepared on the basis of oblique aerial images taken with a camera mounted on the unmanned aerial vehicle.

Measurements were made on two orthophotomaps prepared for instants t₋₁ and t₀ (in the embodiment t₋₁ = (29/06/2016, 09:00 UTC) and t₀ = (29/06/2016, 10:00 UTC)), made from oblique aerial images with the use of the commonly known SfM procedure. The measured surface areas were indicated as A₁,A₂,...,A₁₀, for two consecutive instants of observation. On the basis of the known method for detecting significant increases in the water surface area, based on the Student's t test in the Bootstrap version (Niedzielski et al., 2016), Table 1 was prepared, which contains test values for checking whether, between two observations, there was a statistically significant increase in the water surface area which is correlated with an increase in the water level and in the discharge (Usachev, 1983; Xia et al., 1983; Smith, 1997).

**Table 1**

| | 29.06.2016, 09:00 UTC | | 29.06.2016, 10:00 UTC | |
|---|---|---|---|---|
| | Asymptotic | Bootstrap | Asymptotic | Bootstrap |
| 29.06.2016, 09:00 UTC | 0.5 | 0.5 | 0.1426748 | 0.1334597 |
| 29.06.2016, 10:00 UTC | 0.8573252 | 0.8674118 | 0.5 | 0.5 |

From Table 1, it follows that in the period between (t₋₁) = 09:00 and (t₀) =10:00 UTC, there were not any statistically significant increases in the water surface area (p-value was 0.1334597, which, when assuming level of significance set in the description of the invention equal to 0.01, confirms not only the lack of significant increases in the water surface area but also the lack of significant increases in the water level and in the discharge).

Furthermore, a detailed list of measurements, from steps 1 and 2 according to the invention, necessary to implement the embodiment in two variants, is presented in Tables 2 and 3 below, wherein in the embodiment, an unmanned aerial vehicle which belongs to one of possible categories of unmanned aerial vehicle was used.

**Table 2**

| | | Past | | Present | |
|---|---|---|---|---|---|
| | | [t₋₆₈₂,t₋₂] | t₋₁ | t₀ | |
| | | 01.06.2016 00:00 UTC - 29.06.2016 08:00 UTC | 29.06.2016 09:00 UTC | 29.06.2016 10:00 UTC | |
| | | | | First variant | Second variant |
| *H* [cm] | Water level sensor | Series of measurements | 107 | 107 | 113 |
| *Q* [m³/s] | Rating curve | Series of measurements | 1.45 | 1.45 | 2.5 |
| *A*₁ [m ²] | Unmanned aerial vehicle* | Lack of measurement | 350.4 | 360.4 | 360.4 |
| *A*₂ [m²] | Unmanned aerial vehicle* | Lack of measurement | 380.0 | 393.7 | 393.7 |
| *A*₃ [m²] | Unmanned aerial vehicle* | Lack of measurement | 349.2 | 396.5 | 396.5 |
| *A*₄ [m²] | Unmanned aerial vehicle* | Lack of measurement | 366.9 | 360.1 | 360.1 |
| *A*₅ [m²] | Unmanned aerial vehicle* | Lack of measurement | 368.4 | 352.7 | 352.7 |
| *A*₆ [m²] | Unmanned aerial vehicle* | Lack of measurement | 385.9 | 386.3 | 386.3 |
| *A*₇ [M²] | Unmanned aerial vehicle* | Lack of measurement | 383.5 | 390.0 | 390.0 |
| *A*₈ [m²] | Unmanned aerial vehicle* | Lack of measurement | 325.7 | 331.3 | 331.3 |
| *A*₉ [m²] | Unmanned aerial vehicle* | Lack of measurement | 346.3 | 345.5 | 345.5 |
| *A*₁₀ [m²] | Unmanned aerial vehicle* | Lack of measurement | 362.8 | 365.0 | 365.0 |

**Table 3**

| | | Past | | Present | |
|---|---|---|---|---|---|
| | | [t₋₆₈₂,t₋₂] | t₋₁ | t₀ | |
| | | 01.06.2016 00:00 UTC 29.06.2016 08:00 UTC | 29.06.2016 09:00 UTC | 29.06.2016 10:00 UTC | |
| | | | | First variant | Second variant |
| *H* [cm] | Water level sensor | Series of measurements | 342 | 341 | 341 |
| *Q* [m³/s] | Rating curve | Series of measurements | 1.54 | 1.42 | 1.42 |

In step 3 of the embodiment, series of data measured in steps 1 and 2 are taken to the processing system. The processing system, in case of the embodiment, is the HydroProg computer processing system (Niedzielski et al., 2014; fig. 2), especially A and B1 modules of this system.

In step 4 of the embodiment of the method according to the invention, verification and/or cross compliance of times of series of collected measurement data are carried out in the HydroProg system, where the data were further processed in B 1 module (Niedzielski et al., 2014; fig. 2), which ensured verification of cross compliance of measurement time and also compliance with UTC time.

In step 5 of the embodiment of the method according to the invention, in the HydroProg system, (initial) identification and possible correction of erroneous measurement data are carried out.

B2 module of the HydroProg system (Niedzielski et al., 2014; fig. 2) identifies the measurement data which deviate from the normal distribution of measurement data in the series of hydrometric measurements, and in the case of a deviating data - it creates a new, corrected series of data. This procedure is run by flagging the measurements, flowing down every hour, of the Kwisa river discharge in Gryfów Śl 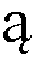 ski (W1 measurement point).

The identification takes place with the use of the Rosner's test (Rosner, 1983), wherein in B2 module of the HydroProg system, the test is used simultaneously for the explained measurements (station downstream of the river, at the outfall to the water reservoir - in the embodiment, these are the Kwisa river discharges in Gryfów Śl 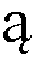 ski, in the first measurement point W1) and the explanatory measurements (station upstream of the river - in the embodiment, these are the Kwisa river discharges in Mirsk - i.e. in the second measurement point W2). A measurement point is considered erroneous (initially) only if the measurement of the Kwisa river discharge in Gryfów Śl 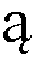 ski is classified as deviating from the normal distribution and simultaneously the measurement of the Kwisa river discharge in Mirsk is not classified as a value deviating from the normal distribution.

In the HydroProg system, there are two strategies for correcting measurements considered (initially) to be erroneous:
- if the measurement considered to be erroneous is located in the measurement series between measurements considered to be correct, the linear interpolation is used,
- if the measurement considered to be erroneous is located at the end of the measurement series, so that any measurement considered to be correct does not follow it in the measurement series, this measurement remains in unchanged form in the series.

Due to the adopted assumptions that no alarm in case of high flow emergency is more disadvantageous than a few false alarms, therefore the solution included in B2 module may consider the last measurement in the series as erroneous in a manner inconsistent with the actual state. An additional and independent verification of the reliability of especially the last measurement points is necessary.

For this purpose, in step 6 of the embodiment of the method according to the invention, verification of reliability of discharge measurements from the measurement point (W1) was carried out based on data from step 2 of the embodiment of the method according to the invention (described below).

In the first variant of the embodiment of the method according to the invention, a measurement considered (initially) to be correct in step 5 at the end of the measurement series at instant t₀ = (29/06/2016, 10:00 UTC) is transmitted from step 5 to step 6. As described above in step 2, from data of Table 1, it follows that between the times t₋₁ and t₀, there were not any statistically significant increases in the water surface area between the water gauge W1 and the outfall to the reservoir. Therefore, the analysis from Table 1 confirms correctness of the last measurement point for the discharge at instant t₀.

It is thus possible to use and transmit, in step 7 of the first variant of the embodiment, a complete measurement series, comprising last measurement at t₀, for determining the expected course of discharge variability of the Kwisa river in Gryfów Śl 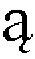 ski, which is necessary to calculate the expected inflow to Z 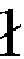 otnickie lake for 12 hours ahead.

In the embodiment, the expected course of discharge variability of the Kwisa river in Gryfów Śl 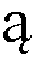 ski, based on which the expected inflow to Z 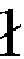 otnickie lake is calculated, is generated with the use of B3, B4, C1, C2 and E modules of the HydroProg system (Niedzielski et al., 2014; fig. 2). In particular, in C1, C2 and E modules, a combination of univariate autoregression method and multivariate autoregression method is used (Niedzielski and Miziński, 2016). The expected course of discharge variability of the Kwisa river in Gryfów Śl 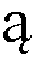 ski is a convex combination of expected course of discharge variability at this station determined by univariate and multivariate autoregression methods. In the first case, the autoregression is based only on measurements of discharge Q on the Kwisa river in Gryfów Śl 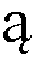 ski (W1). In the second case, the bivariate autoregression model is used which is based on measurements of discharge Q on the Kwisa river both in Gryfów Śl 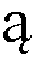 ski (W1) and at the station located upstream in Mirsk (W2).

This method is one of many known methods for determining the expected course of discharge variability.

Fig. 5 shows the actual course of the discharge hydrograph together with the course expected for 12 h ahead from instant t₀ to instants t₁,t₂,...,t₁₂ (since 11:00 to 22:00 UTC). The expected inflow to Z 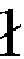 otnickie lake is the integral under the graph of the expected course of the discharge hydrograph in the range of t₀ to t₁₂.

Similarly, in order to verify the reliability, the actual inflow to the water reservoir is calculated, wherein the integral under the graph of the actual course of the discharge hydrograph in the same range is considered. Various integration methods are possible but for the purposes of the embodiment, a trapezoid method was used which consists in approximating the field with trapezoids under the graph of the discharge hydrograph course and in multiplying them by 3600 (number of seconds included in one hour). The actual inflow to the reservoir in the time of 12 hours, since 10:00 to 22:00 UTC, was 57381.60 m³, whereas the expected inflow in the same period was 56975.46 m³. Therefore, the percentage error was 0.7%.

The error value when determining the expected inflow to Z 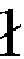 otnickie lake was small, and the reliability of this determination was high due to the confirmation by an independent measurement for the last measurement point at instant t₀ with the use of independent measurements on the orthophotomap prepared based on aerial images taken with the use of an unmanned aerial vehicle.

In step 8, the calculated expected inflow is transmitted by any means of data communications to the rule controlling the water reservoir.

In the second variant of the embodiment of the method according to the invention, an observation indicated (initially, in step 5) to be erroneous at the end of the measurement series at instant t₀ = (29/06/2016, 10:00 UTC) is transmitted from step 5 to step 6. In the method according to the invention, this suggests the possibility of erroneous observation at the end of the measurement series at instant t₀.

Due to the unavailability of actual data, the second variant of the embodiment assumes an artificial modification of the last discharge measurement at instant t₀ from 1.45 m³/s (from the first variant of the embodiment) to 2.5 m³/s (fig. 6). Value 2.5 m³/s was selected so as to be located in a different zone of characteristics discharges than value 1.45 m³/s. The lower limit of NSQ average discharges is in fact at about 2.4 m³/s, which is shown in fig. 6. Situation of a rapid increase in the discharge in the period of one hour in mountain conditions may occur both at the beginning of a developing high flow and for technical reasons associated with the sensor failure or interference of third parties in the operation of the sensor. Therefore, the adopted value has grounds of the real hydrological situation.

From Table 1, it is known that between times t₋₁ and t₀ (09:00 and 10:00 UTC), there were not any statistically significant increases in the water surface area between the water gauge in Gryfów Śl 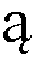 ski (W1) and the Kwisa river oufall to Z 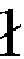 otnickie lake. Therefore, there were not any significant increases in the water level and in the discharge.

The results provided in Table 1 confirm the grounds (initially; in step 5) for considering the last measurement point as erroneous for the discharge at instant t₀, which means that the value of the last measurement (2.5 m³/s) is erroneous.

Previously, the last measurement was always accepted, when functioning as part of the HydroProg system. Extending the HydroProg system with an independent verification of reliability of the last measurement in the series, carried out with the use of an unmanned aerial vehicle, allows, therefore, modification of arbitrary assignment of erroneous value for instant t₀ to the nearest previous value indicated (initially; in step 5) as correct.

The expected inflow to Z 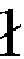 otnickie lake in the time horizon of 12 hours, since 10:00 to 22:00 UTC, is calculated analogously to that described in the first variant of the embodiment.

Without the use of measurements of the water surface area, carried out on the orthophotomap made based on oblique aerial images, and thus accepting the value of 2.5 m³/s for the last measurement at instant t₀, the expected inflow since 10:00 to 22:00 UTC dated 29/06/2016 was 92353.13 m³, which is a value that carries a percentage error of the order of 60.9%. Consideration of measurements of the water surface area which are possible thanks to the use of the unmanned aerial vehicle leads to authentication of an initial classification of measurement errors, and as a result, to adoption of penultimate value of the discharge indicated as correct, i.e. measurement at t₋₁ at 09:00 UTC being equal to 1.45 m³/s (Table 2).

The expected course of discharge variability on the Kwisa river in Gryfów Śl 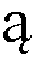 ski (W1) was changed and assumed the form as in fig. 5. The actual inflow to the reservoir in the time of the considered 12 hours was 57381.60 m³, whereas the expected inflow in the same period was 56975.46 m³. Therefore, the percentage error was 0.7%.

Thanks to the use of the method for assessing the reliability of hydrometric measurements, supported by the operation of the unmanned aerial vehicle, the percentage error of the expected 12-hour inflow to Z 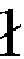 otnickie lake was reduced from 60.9% to 0.7%.

Therefore, the inflow value transmitted in step 8 to the rule controlling the water reservoir was reliable and potentially did not generate any expensive procedure, e.g. emergency drainage of water from the reservoir.

Embodiments are given here only as non-limiting indications regarding the invention and cannot in any way limit the scope of protection which is defined by the claims.

### Literature references

Niedzielski T., Miziński B., Kryza M., Netzel P., Wieczorek M., Kasprzak M., Kosek W., Migoń P., Szymanowski M., Jeziorska J., Witek M., 2014. HydroProg: a system for hydrologic forecasting in real time based on the multimodelling approach. Meteorology Hydrology and Water Management. Research and Operational Applications 2, 65-72.
Niedzielski T., Miziński B., 2016. Real-time hydrograph modelling in the upper Nysa K 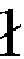 odzka river basin (SW Poland): a two-model hydrologic ensemble prediction approach. Stochastic Environmental Research and Risk Assessment, DOI: 10.1007/s00477-016-1251-5.
Niedzielski T., Witek M., Spallek W., 2016. Observing river stages using unmanned aerial vehicles. Hydrology and Earth System Sciences 20, 3193-3205.
Rosner B., 1983. Percentage points for a generalized ESD many-outlier procedure. Technometrics 25, 165-172.
Smith L.C., 1997. Satellite remote sensing of river inundation area, stage, and discharge: a review. Hydrological Processes 11, 1427-1439.
Usachev V.F., 1983. Evaluation of flood plain inundations by remote sensing methods. Proceedings of the Hamburg Symposium, IAHS Publ. 145, 475-482.
Xia L., Shulin Z., Xianglian L., 1983. The application of Landsat imagery in the surveying of water resources of Dongting Lake. Proceedings of the Hamburg Symposium, IAHS Publ. 145.483-489.
Braca G., 2008. Stage-discharge relationships in open channels: Practices and problems. FORALPS Technical Report, 11. Universita degli Studi di Trento, Dipartimento di Ingegneria Civile e Ambientale, Trento, Italy, 24 p.
Ghosh S.N., Desai V.R., 2006. Environmental Hydrology and Hydraulics Eco-technological Practices for Sustainable Development. Taylor & Francis, Boca Raton.
Turnipseed D.P., Sauer V.B., 2010. Discharge measurements at gaging stations: U.S. Geological Survey Techniques and Methods book 3, chap. A8, 87 p.
Westoby M.J., Brasington J., Glasser N.F. Hambrey M.J., Reynolds J.M., 2012. 'Structure-from-Motion' photogrammetry: A low-cost, effective tool for geoscience applications. Geomorphology 179, 300-314.
Efron, B., 1979. Bootstrap Methods: Another Look at the Jackknife. Annals of Statistics 7, 1-26.

## Claims

1. A method for determining expected inflow to a water reservoir, for a rule controlling the water reservoir in any chosen catchment, is **characterised in that** the method comprises steps of:
- step 1: periodic-in-time determination of discharges at at least two different measurement points on at least one watercourse belonging to the same catchment, at least until an expected inflow is determined (t₀);
- step 2: periodic-in-time measurement, at least until the expected inflow is determined (t₀) and at least at a time preceding the expected inflow determination (t₋₁), for a surface area of the watercourse between a measurement point located on the watercourse above an outfall to the reservoir and the outfall to the reservoir;
- step 3: collection of series of measurement data obtained from the preceding steps for the processing system;
- step 4: verification and/or cross compliance of times of series of collected measurement data;
- step 5: identification and possible correction of initially considered as erroneous measurement data comprising:
- identification of measurement data deviating from the normal distribution of the measurement data collected in the preceding step for all measurement points using the Rosner's test;
- identification of erroneous data for the measurement series from a point above the outfall to the water reservoir, wherein the data is considered erroneous if at a given time, the measurement data near the point at the outfall to the reservoir deviates from the normal distribution, and the measurement data from another measurement point, upstream relative to the first measurement point, is not a data deviating from the normal distribution;
- correction of erroneous data from the measurement point near the outfall to the water reservoir, by using linear interpolation on data adjacent to the erroneous data, wherein if the erroneous data is at the end of the measurement series, this data remains unchanged;
- step 6: verification of reliability of measurements at the end of the series by taking into account the measurement of water surface area of the watercourse from step 2 at the time at which the expected inflow is determined (t₀) and at the time preceding the expected inflow determination (t₋₁), wherein:
- if at the end of the series there is a correct data and the measurement of the water surface area made in step 2 does not indicate any change in the water surface area between the time at which the expected inflow is determined (t₀) and the time preceding the expected inflow determination (t₋₁), the discharge value at the end of the series is unchanged,
- if at the end of the series there is a correct data and the measurement of the water surface area made in step 2 indicates a change in the water surface area between the time at which the expected inflow is determined (t₀) and the time preceding the expected inflow determination (t₋₁), the end point of the series is determined based on linear regression using at least two available measurement points,
- if at the end of the series there is an erroneous data and the measurement of the water surface area made in step 2 does not indicate any change in the water surface area between the time at which the expected inflow is determined (t₀) and the time preceding the expected inflow determination (t₋₁), the last correct value is assigned to the discharge at the end of the series,
- if at the end of the series there is an erroneous data and the measurement of surface area indicates a change in the water surface area between the time at which the expected inflow is determined (t₀) and the time preceding the expected inflow determination (t₋₁), the discharge value at the end of the series is unchanged and is considered to be correct;
- step 7: transmission of data corrected in the previous steps for the calculation, in the processing system, of expected inflow to the water reservoir and the calculation, in the processing system, of expected water inflow to the reservoir based on data from previous steps;
- step 8: transmission of the expected water inflow as a parameter to the rule controlling the water reservoir.

2. The method according to claim 1, **characterised in that** the discharge in step 1 is determined based on the measurement of water level, converted into discharge value using a rating curve and/or based on the measurement of water level, a measurement of water discharges velocity at the surface of the watercourse and of bed cross-section, converted into discharge values, using the continuity equation.

3. The method according to claim 1 or 2, **characterised in that** measurement of the watercourse surface area is determined by means of at least 8 rectangular orthophotomap fragments showing the course of the watercourse, the said orthophotomaps being generated by SfM, Structure-from-Motion, method based on at least one oblique image taken by an unmanned aerial vehicle.

4. The method according to any one of the preceding claims, **characterised in that** the discharge determination from step 1 and the measurement of watercourse surface area from step 2 are carried out with the same time interval.

5. The method according to claim 4, **characterised in that** the time interval lasts 1 hour.

6. The method according to any one of the preceding claims, **characterised in that** the method is carried out in real time and/or is carried out at any time.

7. The method according to any one of the preceding claims, **characterised in that** a section of the watercourse between the outfall to the reservoir and a measurement point near the outfall to the reservoir is a section without tributaries.

8. The method according to any one of the preceding claims, **characterised in that** the measurement points are located within one catchment, above an outlet located upstream of the river in relation to its outfall to the water reservoir.

9. The method according to any one of the preceding claims, **characterised in that** a measurement point near the outfall to the reservoir is distanced from the outfall to the reservoir by at least 1.9 km.

10. The method according to any one of the preceding claims, **characterised in that** the method is performed by a computer program implemented in the computer processing system.

## Patentansprüche

1. Verfahren zur Bestimmung des erwarteten Zustroms zu einem Wasserreservoir, für eine Regel zum Steuern des Wasserreservoirs in einem beliebig gewählten Einzugsbereich, ist **dadurch gekennzeichnet, dass** das Verfahren die Schritte umfasst:
- Schritt 1: periodische zeitliche Bestimmung der Strömungen an mindestens zwei verschiedenen Messpunkten in mindestens einem zu demselben Einzugsbereich gehörenden Wasserlauf, mindestens bis ein erwarteter Zustrom bestimmt wird (to);
- Schritt 2: periodische zeitliche Messung, mindestens bis der erwartete Zustrom bestimmt wird (t₀) und mindestens in einer Zeit die der Bestimmung (t₋₁) des erwarteten Zustroms vorausgeht, für eine Fläche des Wasserlaufs zwischen einem im Wasserlauf oberhalb einer Mündung ins Reservoir befindlichen Messpunkt und der Mündung ins Reservoir;
- Schritt 3: Sammlung von aus vorigen Schritten erhaltenen Messdatenserien für das Bearbeitungssystem;
- Schritt 4: Verifizierung und/oder Cross Compliance der Serienzeiten der gesammelten Messdaten;
- Schritt 5: Identifizierung und eventuelle Korrektur der an Anfangs als fehlerhaft angesehenen Messdaten umfassend:
- Identifizierung der Messdaten, die von der normalen Verteilung der im vorigen Schritt für alle Messpunkte gesammelten Messdaten abweichen, unter Verwendung des Rosner's Tests;
- Identifizierung der fehlerhaften Daten für die Messserie aus einem Punkt oberhalb der Mündung ins Wasserreservoir, wobei die Daten als fehlerhaft angesehen werden, wenn zu einer gegebenen Zeit die Messdaten in der Nähe des Punktes an der Mündung ins Reservoir von der normalen Verteilung abweichen, und die Messdaten aus einem anderen Messpunkt stromaufwärts zum ersten Messpunkt keine von der normalen Verteilung abweichende Daten sind;
- Korrektur der fehlerhaften Daten aus dem Messpunkt in der Nähe der Mündung ins Wasserreservoir unter Verwendung linearer Interpolation auf die die fehlerhaften Daten angrenzenden Daten, wobei, wenn die fehlerhaften Daten sich am Ende der Messserien befinden, diese Daten unverändert bleiben;
- Schritt 6: Verifizierung der Zuverlässigkeit der Messungen am Ende der Serien bei Bezugnahme der Messung der Wasserfläche des Wasserlaufs vom Schritt 2 zur Zeit, in der der erwartete Zustrom bestimmt wird (t₀) und zur Zeit die der Bestimmung (t₋₁) des erwarteten Zustroms vorausgeht, worin:
- wenn am Ende der Serie sich korrekte Daten befinden und die in Schritt 2 durchgeführte Messung der Wasserfläche keine Änderung in der Wasserfläche zwischen der Zeit, in der der erwartete Zustrom bestimmt wird (t₀) und der der Bestimmung (t₋₁) des erwarteten Zustroms vorausgehenden Zeit anzeigt, bleibt der Strömungswert am Ende der Serie unverändert,
- wenn am Ende der Serie sich korrekte Daten befinden und die in Schritt 2 durchgeführte Messung der Wasserfläche eine Änderung in der Wasserfläche zwischen der Zeit, in der der erwartete Zustrom bestimmt wird (t₀) und der der Bestimmung (t₋₁) des erwarteten Zustroms vorausgehenden Zeit anzeigt, wird der Endpunkt der Serie anhand der linearen Regression unter Verwendung mindestens zwei zugänglichen Messpunkten bestimmt,
- wenn am Ende der Serie sich fehlerhafte Daten befinden und die in Schritt 2 durchgeführte Messung der Wasserfläche keine Änderung in der Wasserfläche zwischen der Zeit, in der der erwartete Zustrom bestimmt wird (t₀) und der der Bestimmung (t₋₁) des erwarteten Zustroms vorausgehenden Zeit anzeigt, wird der letzte korrekte Wert der Strömung am Ende der Serie zugeordnet,
- wenn am Ende der Serie sich fehlerhafte Daten befinden und die Messung der Wasserfläche eine Änderung in der Wasserfläche zwischen der Zeit, in der der erwartete Zustrom bestimmt wird (t₀) und der der Bestimmung (t₋₁) des erwarteten Zustroms vorausgehenden Zeit anzeigt, bleibt der Strömungswert am Ende der Serie unverändert und wird als korrekt angesehen;
- Schritt 7: Übertragung der in vorigen Schritten korrigierten Daten zur Kalkulation, im Verarbeitungssystem, des erwarteten Zustroms ins Wasserreservoir und die Kalkulation, im Verarbeitungssystem, des erwarteten Zustroms ins Wasserreservoir anhand der Daten aus den vorigen Schritten;
- Schritt 8: Übertragung des erwarteten Wasserzustroms als Parameter zu der Regel zum Steuern des Wasserreservoirs.

2. Verfahren nach Anspruch 1, **dadurch gekennzeichnet, dass** der Strömung in Schritt 1 anhand der Messung des Wasserniveaus, die in einen Strömungswert unter Verwendung einer Durchflusskurve und/oder anhand der Messung des Wasserniveaus umwandelt wird, Messung der Wasserströmunggeschwindigkeit auf der Oberfläche des Wasserlaufs und des Bodenquerschnitts, die in Strömungswerte unter Verwendung der Kontinuitätsgleichung umwandelt wird, bestimmt wird.

3. Verfahren nach Anspruch 1 oder 2, **dadurch gekennzeichnet, dass** die Messung der Fläche des Wasserlaufs durch mindestens 8 rechteckige Fragmente eines Orthofotos, die den Verlauf des Wasserlaufs zeigen, wobei die genannte Orthofotos durch ein SfM, Structure-from-Motion, Verfahren anhand mindestens eines von einem unbemannten Luftfahrzeug aufgenommenen schrägen Bildes generiert werden, bestimmt wird.

4. Verfahren nach einem der vorgehenden Ansprüche, **dadurch gekennzeichnet, dass** die Bestimmung der Strömung von Schritt 1 und die Messung der Fläche des Wasserlaufs von Schritt 2 mit demselben Zeitintervall durchgeführt werden.

5. Verfahren nach Anspruch 4, **dadurch gekennzeichnet, dass** das Zeitintervall 1 Stunde beträgt.

6. Verfahren nach einem der vorgehenden Ansprüche, **dadurch gekennzeichnet, dass** das Verfahren in Echtzeit durchgeführt wird und/oder zu einer beliebigen Zeit durchgeführt wird.

7. Verfahren nach einem der vorgehenden Ansprüche, **dadurch gekennzeichnet, dass** der Abschnitt des Wasserlaufs zwischen der Mündung ins Reservoir und dem Messpunkt in der Nähe der Mündung ins Reservoir ein Abschnitt ohne Zuflüsse ist.

8. Verfahren nach einem der vorgehenden Ansprüche, **dadurch gekennzeichnet, dass** die Messpunkte innerhalb eines Einzugsbereichs, oberhalb eines Auslaufs stromaufwärts eines Flusses gegenüber seiner Mündung ins Wasserreservoir angeordnet sind.

9. Verfahren nach einem der vorgehenden Ansprüche, **dadurch gekennzeichnet, dass** Messpunkt in der Nähe der Mündung ins Reservoir von der Mündung ins Reservoir mindestens 1,9 km entfernt ist.

10. Verfahren nach einem der vorgehenden Ansprüche, **dadurch gekennzeichnet, dass** das Verfahren von einem ins Computerverarbeitungssystem implementierten Computerprogramm durchgeführt wird.

## Revendications

1. Procédé de détermination de captage attendu dans un réservoir d'eau, pour une règle contrôlant le réservoir d'eau dans tout bassin versant choisi, est **caractérisé en ce que** le procédé comprend les étapes de:
- étape 1: détermination périodique en temps des décharges en au moins deux points de mesure différents sur au moins un cours d'eau appartenant au même bassin versant, au moins jusqu'à ce qu'un captage attendu soit déterminé (t₀);
- étape 2: mesure périodique en temps, au moins jusqu'à ce qu le captage attendu soit déterminé (t₀) et au moins à un temps précédant la détermination (t₋₁) de captage attendu, pour une surface du cours d'eau entre un point de mesure situé sur le cours d'eau au-dessus d'un exutoire au réservoir et l'exutoire au réservoir;
- étape 3: collecte de séries de données de mesure obtenues à partir des étapes précédentes pour le système de traitement ;
- étape 4: vérification et/ou conditionnalité des temps des séries de données de mesure collectées ;
- étape 5: identification et correction éventuelle de données de mesure initialement considérées comme erronées, comprenant :
- identification des données de mesure s'écartant de la distribution normale des données de mesure collectées à l'étape précédente pour tous les points de mesure, en utilisant le test de Rosner ;
- identification de données erronées pour le série de mesure d'un point situé au-dessus de l'exutoire au réservoir d'eau, où les données sont considérées comme erronées si, à un temps donné, les données de mesure proches du point situé à l'exutoire du réservoir s'écartent de la distribution normale, et les données de mesure provenant d'un autre point de mesure, en amont du premier point de mesure, ne sont pas des données s'écartant de la distribution normale ;
- correction des données erronées du point de mesure proche de l'exutoire au réservoir d'eau, en utilisant une interpolation linéaire sur des données adjacentes aux données erronées, où si les données erronées se trouvent à la fin de la série de mesures, ces données restent inchangées ;
- étape 6 : vérification de la fiabilité des mesures à la fin de la série, en prenant en compte la mesure de la surface d'eau du cours d'eau de l'étape 2 au temps où le captage attendu est déterminé (t₀) et au temps précédant la détermination (t₋₁) de captage attendu, où:
- si à la fin de la série il y a des données correctes et la mesure de la surface d'eau faite à l'étape 2 n'indique aucun changement de la surface d'eau entre le temps où le captage attendu est déterminé (t₀) et le temps précédant la détermination (t₋₁) de captage attendu, la valeur de décharge à la fin de la série est inchangée,
- si à la fin de la série il y a des données correctes et la mesure de la surface d'eau faite à l'étape 2 indique un changement de la surface d'eau entre le temps où le captage attendu est déterminé (t₀) et le temps précédant la détermination (t₋₁) de captage attendu, le point final de la série est déterminé sur la base d'une régression linéaire en utilisant au moins deux points de mesure disponibles,
- si à la fin de la série il y a des données erronées et la mesure de la surface d'eau faite à l'étape 2 n'indique aucun changement de la surface d'eau entre le temps où le captage attendu est déterminé (t₀) et le temps précédant la détermination (t₋₁) de captage attendu, la dernière valeur correcte est attribuée à la décharge à la fin de la série,
- si à la fin de la série il y a des données erronées et la mesure de la surface d'eau indique un changement de la surface d'eau entre le temps où le captage attendu est déterminé (t₀) et le temps précédant la détermination (t₋₁) de captage attendu, la valeur de décharge à la fin de la série est inchangée et est considérée comme correcte ;
- étape 7 : transmission de données corrigées aux étapes précédentes pour le calcul, dans le système de traitement, de captage attendu dans le réservoir d'eau et le calcul, dans le système de traitement, de captage attendu dans le réservoir sur la base des données des étapes précédentes ;
- étape 8 : transmission du captage d'eau attendu en tant que paramètre à la règle contrôlant le réservoir d'eau.

2. Procédé selon la revendication 1, **caractérisé en ce que** la décharge à l'étape 1 est déterminée sur la base de la mesure du niveau d'eau, convertie en valeur de décharge, en utilisant une courbe de notation et/ou sur la base de la mesure du niveau d'eau, une mesure de la vitesse des décharges d'eau à la surface du cours d'eau et de la section transversale du lit, converties en valeurs de décharge, en utilisant l'équation de continuité.

3. Procédé selon la revendication 1 ou 2, **caractérisé en ce que** la mesure de la surface du cours d'eau est déterminée au moyen d'au moins 8 fragments d'orthophotocarte rectangulaires représentant le cours du cours d'eau, lesdites orthophotocartes étant générées par la méthode SfM, Structure-from-Motion, basée sur au moins une image oblique prise par un véhicule aérien sans personnel.

4. Procédé selon l'une quelconque des revendications précédentes, **caractérisé en ce que** la détermination de la décharge de l'étape 1 et la mesure de la surface du cours d'eau de l'étape 2 sont effectuées avec le même intervalle de temps.

5. Procédé selon la revendication 4, **caractérisé en ce que** l'intervalle de temps dure 1 heure.

6. Procédé selon l'une quelconque des revendications précédentes, **caractérisé en ce que** le procédé est effectué en temps réel et/ou est effectué n'importe quand.

7. Procédé selon l'une quelconque des revendications précédentes, **caractérisé en ce qu'**une section du cours d'eau entre l'exutoire au réservoir et un point de mesure proche de l'exutoire au réservoir est une section sans affluents.

8. Procédé selon l'une quelconque des revendications précédentes, **caractérisé en ce que** les points de mesure sont situés dans un seul bassin versant, au-dessus d'un déversoir situé en amont du fleuve par rapport à son exutoire au réservoir d'eau.

9. Procédé selon l'une quelconque des revendications précédentes, **caractérisé en ce qu'**un point de mesure proche de l'exutoire au réservoir est éloigné d'au moins 1,9 km de l'exutoire au réservoir.

10. Procédé selon l'une quelconque des revendications précédentes, **caractérisé en ce que** le procédé est exécuté par un programme informatique implémenté dans le système de traitement informatique.
